# EUROPÄISCHE PATENTSCHRIFT

(11) **EP 2 655 908 B1**
(45) Veröffentlichungstag und Bekanntmachung des Hinweises auf die Patenterteilung: **24.06.2015**
(21) Anmeldenummer: 11772903.8
(22) Anmeldetag: 20.10.2011
(51) Int. Cl.: F16C 33/66, F16C 29/06

(54) **FÜHRUNGSWAGEN MIT SCHMIERVENTIL**
GUIDE CARRIAGE COMPRISING A LUBRICATION VALVE
CHARIOT DE GUIDAGE À VANNE DE LUBRIFIANT

(30) Priorität: 28.10.2010 DE 102010049944
(43) Veröffentlichungstag der Anmeldung: 30.10.2013
(73) Patentinhaber: Robert Bosch GmbH, 70469 Stuttgart (DE)
(72) Erfinder: SCHUPIES, Andreas, 97469 Gochsheim (DE); DORN, Stefan, 97450 Arnstein (DE); PFEUFFER, Carsten, 97520 Roethlein (DE); SIEBENSCHUCK, Achim, 97633 Hoechheim (DE); MAISS, Harald, 97525 Schwebheim (DE); KRAFT, Ekkehard, 97282 Retzstadt (DE); SCHOTT, Andre, 97456 Dittelbrunn (DE); DITTMAR, Michael, 97421 Schweinfurt (DE)
(74) Vertreter: Maiß, Harald
(86) Internationale Anmeldenummer: PCT/EP2011/005301
(87) Internationale Veröffentlichungsnummer: WO 2012/055513

(56) Entgegenhaltungen:
- EP-A1- 0 919 738
- US-A- 5 584 581

## Beschreibung

Die Erfindung betrifft einen Führungswagen gemäß dem Oberbegriff von Anspruch 1.

Aus der EP 1 676 040 B1 ist ein Führungswagen bekannt, der zur Verwendung mit einer sich in eine Längsrichtung erstreckende Führungsschiene vorgesehen ist. Gemäß den Fig. 1 und 2 der EP 1 676 040 B1 umfasst der Führungswagen einen Tragkörper 1, an dem vier sich in Längsrichtung erstreckende Laufbahnen 2, 3 vorgesehen sind. Jeder Laufbahn ist eine Reihe von kugelförmigen Wälzkörpern 9 zugeordnet, die zwischen der Laufbahn und der Führungsschiene abwälzen können. An den beiden in Längsrichtung weisenden Stirnflächen des Tragkörpers ist je eine Umlenkbaugruppe angebracht. In der Umlenkbaugruppe ist für jede Reihe von Wälzkörpern ein gebogener Umlenkkanal 11, 12 vorgesehen, der durch ein erstes Umlenkteil 14 in Form einer Umlenkplatte und ein zweites Umlenkteil 13 in Form einer Endkappe begrenzt wird. Die gebogenen Umlenkkanäle sind über Rücklaufkanäle 5, 6 so miteinander verbunden, dass die Wälzkörper endlos umlaufen können.

In dem Führungswagen ist weiter ein Schmiermittelverteilsystem vorgesehen, mit dem die Wälzkörper mit Schmiermittel versorgt werden können. Das Schmiermittelverteilsystem umfasst einen ersten Schmierkanal 26, der an der Rückseite des ersten Schmierteils angeordnet ist, wobei er quer zur Längsrichtung verläuft. Der erste Schmierkanal ist im Querschnitt betrachtet U-förmig ausgebildet, wobei er durch die zugeordnete Stirnfläche des Tragkörpers abgedeckt wird.

Weiter ist in dem ersten Umlenkteil eine in Längsrichtung verlaufende Übergabebohrung 18 vorgesehen, deren Austrittsöffnung in der Nähe der endlos umlaufenden Wälzkörper angeordnet ist. In der Übergabebohrung sind insgesamt vier trichterartige Ventilklappen 30 angeordnet, die im Wesentlichen senkrecht zur Längsrichtung ausgerichtet sind, wobei sie elastisch umbiegbar sind. Im Rahmen der vorliegenden Anmeldung soll unter einer im Wesentlichen senkrecht zur Längsrichtung ausgerichteten Ventilklappe eine Ventilklappe verstanden werden, welche durch ein Kunststoffspritzgusswerkzeug hergestellt werden kann, dessen beide Formhälften beim Öffnen des Werkzeuges in Längsrichtung auseinander fahren. Hierbei kommt es insbesondere darauf an, dass der Ventilspalt, der durch die Ventilklappen definiert und der ausschließlich durch das erste Umlenkteil definiert wird, mit einer sehr geringen Breite hergestellt werden kann.

Die EP 1 676 040 B1 offenbart Ventilklappen, die unter Schließen des Ventilspaltes aneinander anliegen. Derartige Ventilklappen lassen sich mittels Kunststoffspritzgießen nicht ohne Nachbearbeitung herstellen. In der Praxis zeigt sich, dass auch ein Ventilspalt mit einer sehr geringen Breite eine genügend große Dichtwirkung aufweist, so dass ein mit Schmieröl gefüllter erster Schmierkanal nicht alleine durch Schwerkrafteinwirkung leer läuft. Ein derartiger schmaler Ventilspalt ist nur dann prozesssicher herstellbar, wenn die Ventilklappe senkrecht zur Öffnungsrichtung des Spritzgusswerkzeuges ausgerichtet ist, so dass die Breite des Ventilspaltes durch eine einzige Formhälfte des Werkzeuges abgebildet werden kann. Darüber hinaus ist die Gleitbewegung zwischen Ventilspalt und der genannten Formhälfte beim Öffnen des Spritzgusswerkzeuges auf den kleinst möglichen Weg begrenzt, nämlich der Dicke der Ventilklappe.

Nach den vorstehenden Ausführungen versteht es sich von selbst, dass ein Ventilspalt, der zwischen zwei unterschiedlichen Teilen der Umlenkbaugruppe vorgesehen ist, wie diese beispielsweise aus der DE 43 30 772 A1 bekannt ist, keine befriedigende Dichtwirkung aufweist. Dies ist darauf zurückzuführen, dass die Breite des Ventilspaltes nicht mit der erforderlichen Genauigkeit hergestellt werden kann insbesondere, wenn die Bauteile der Umlenkbaugruppe aus Kunststoff spritzgegossen sind.

Der Nachteil des bekannten Führungswagens besteht darin, dass er nur für Ölschmierung und nicht wahlweise auch für Fettschmierung verwendbar ist. Bei Führungswägen handelt es sich um Normteile, die ohne Änderungen für eine Vielzahl von Einsatzfällen verwendbar sein sollen. Insbesondere soll ein und derselbe Schmierkanal sowohl für Öl- als auch für Fettschmierung verwendbar sein. Hierbei muss das beschriebene Ventil bei Ölschmierung genügend dicht sein, um ein Leerlaufen des ersten Schmierkanals zu verhindern. Dies ist notwendig, damit bei Impulsschmierung die kleinen Schmierölmengen, die dem Führungswagen zugeführt werden, sofort zu den Wälzkörpern gelangen und nicht nur den ersten Schmierkanal auffüllen. Gleichzeitig darf bei der ebenfalls möglichen Fettschmierung keine Engstelle im Schmierkanal vorhanden sein, die den Fluss des zähflüssigen Schmierfettes übermäßig behindert. Dies ist insbesondere dann wichtig, wenn das Schmierfett impulsartig zugeführt wird, weil es dabei zu Druckspitzen kommen kann, welche zu unbeabsichtigtem Fettaustritt an den Fügespalten zwischen den einzelnen Bauteilen der Umlenkbaugruppe führen kann.

Die Ventilklappen der EP 1 676 040 B1 sind dabei innerhalb einer Übergabebohrung angeordnet. Sie versperren den Querschnitt der Übergabebohrung auch dann zumindest teilweise, wenn das Ventil geöffnet ist. Hierdurch wird der Fettfluss erheblich behindert.

Weiter haben die Ventilklappen EP 1 676 040 B1 den Nachteil, dass sie im Wesentlichen senkrecht von der sehr steifen Wand der Übergabebohrung abstehen. Beim Aufbiegen der Ventilklappe kommt es daher im Fußbereich der Ventilklappe zu Spannungsspitzen, die bei längerem Betrieb des Führungswagens dazu führen können, dass die Ventilklappe nicht mehr vollständig schließt.

Aus der US 5 584 581 A ist ein Führungswagen mit den Merkmalen des Oberbegriffs des Anspruchs 1 bekannt, der einen ersten und einen zweiten U-förmigen Schmierkanal aufweist. Weiter ist eine elastische Ventilklappe vorgesehen. Es hat sich gezeigt, dass diese Ventilklappe nicht vollkommen dicht schließt. Die aus der EP 1 676 040 B1 bekannte Ventilklappe, weist demgegenüber eine höhere Dichtigkeit auf.

Die Aufgabe der Erfindung besteht darin, die vorstehend beschriebenen Nachteile zu überwinden.

Die Aufgabe wird mit den kennzeichnenden Merkmalen des unabhängigen Anspruchs gelöst. Damit kann die Ventilklappe so angeordnet werden, dass in geöffneter Stellung der Fließweg des Schmierfettes nicht mehr versperrt bzw. eingeengt wird. Gleichzeitig kann ein Sprung in der Materialdicke am Fuß der Ventilklappe vermieden werden, so dass es dort nicht zu Spannungsüberhöhungen kommt. In der Folge ist die erfindungsgemäße Ventilklappe auf Dauer dicht. Hierbei ist anzumerken, dass die Dicke der Ventilklappe im Wesentlichen über den Abstand des ersten und des zweiten Schmierkanals definiert wird. Durch den U-förmigen Schlitz wird ein Abschnitt des genannten Kreuzungsbereichs als Durchtrittsöffnung bereitgestellt.

In den abhängigen Ansprüchen sind vorteilhafte Weiterbildungen und Verbesserungen der Erfindung angegeben.

Der U-förmige Schlitz kann in Form eines Kreissegments ausgebildet sein. Damit hat die Durchtrittsöffnung zwischen erstem und zweitem Schmierkanal bei geöffneter Ventilklappe eine im Wesentlichen kreisförmige Querschnittsform. Dies hat einen geringen Fließwiderstand des Schmierfetts zur Folge. Selbstverständlich kann der U-förmige Schlitz auch jede andere Form aufweisen, so lange er nur beim Aufbiegen der Ventilklappe eine Durchtrittsöffnung freigibt, beispielsweise kann auch an eine Rechteckform gedacht sein.

Die Biegeachse der Ventilklappe, welche durch die beiden Endpunkte des U-förmigen Schlitzes definiert wird, kann im Wesentlichen senkrecht zur Fließrichtung des ersten Schmierkanals angeordnet sein, wobei die Ventilklappe bezüglich der Fließrichtung des ersten Schmierkanals hinter der Biegeachse angeordnet ist. Durch diese Anordnung wird verhindert, dass die Ventilklappe durch das heranströmende Schmiermittel übermäßig weit verformt wird, was eine dauerhafte Verformung derselben zur Folge haben könnte. In der Folge würde das Ventil nicht mehr dicht schließen.

Das Ende des ersten Schmierkanals kann im Wesentlichen konzentrisch bezüglich des U-förmigen Schlitzes ausgeführt sein. Hierdurch wird unnötiger Todraum in Fließrichtung hinter der Ventilklappe verhindert, wobei benachbart zur Ventilklappe Sprünge bezüglich der Materialdicke vermieden werden. Insbesondere kann im Falle eines kreissegmentförmigen Schlitzes eine im Wesentlichen rotationssymmetrische Ventilklappe bereitgestellt werden.

Die Bodenfläche des zweiten Schmierkanals kann eben ausgeführt sein, wobei die zugeordnete Oberfläche der Ventilklappe in einer Ebene mit der genannten Bodenfläche angeordnet ist. Hierdurch wird erreicht, dass die geöffnete Ventilklappe vollständig in den zweiten Schmierkanal hineinragt. In Längsrichtung ist keine Übergabebohrung wie bei der EP 1 676 040 B1 erforderlich, deren Querschnitt durch die Ventilklappe verengt werden könnte.

Die Tiefe des zweiten Schmierkanals kann größer oder gleich der Länge der Ventilklappe sein. Dadurch wird verhindert, dass sich die vollständig geöffnete Ventilklappe im zweiten Schmierkanal verklemmt. Die elastische Biegerückstellkraft würde dann nicht mehr ausreichen, um die Ventilklappe zu schließen.

Die Fließrichtungen des ersten und des zweiten Schmierkanals können in einem Winkel kleiner als 100° zueinander ausgerichtet sein. Hierdurch wird erreicht, dass das Schmiermittel nicht mehr um die geöffnete Ventilklappe herumströmen muss. Die Ventilklappe schwenkt beim Öffnen vielmehr aus dem Fließweg des Schmiermittels so weit heraus, dass es dessen Fließbewegung praktisch nicht mehr behindert.

Das erste Umlenkteil kann eine Austrittsöffnung des zweiten Schmierkanals zu der Reihe von Wälzkörpern definieren, wobei sich die Breite des zweiten Schmierkanals von der Ventilklappe zur Austrittsöffnung keilförmig verringert. Durch die kleine Austrittsöffnung am Ende des Schmierkanals wird erreicht, dass sich das Schmiermittel vorher leicht aufstaut. Der dadurch entstehende Schmierdruck führt zu einem definierten Austreten des Schmiermittels. Gleichzeitig wird erreicht, dass genügend Raum für die Klappbewegung der Ventilklappe vorhanden ist, so dass diese aus dem Fließweg des Schmiermittels heraus klappen kann. An dieser Stelle ist anzumerken, dass man bestrebt ist, das Volumen des zweiten Schmierkanals so klein wie möglich auszuführen, da das Leerlaufen dieses Volumens durch die Ventilklappe nicht verhindert werden kann. Das Volumen des zweiten Schmierkanals muss also bei jedem Schmierimpuls erst aufgefüllt werden, ehe Schmiermittel zu den Wälzkörpern gelangt.

Es können wenigstens zwei gesonderte Reihen von endlos umlaufenden Wälzkörpern vorgesehen sein, wobei mehrere zweite Schmierkanäle vorgesehen sind, die in Schmiermittelerübertragsverbindung mit je einer der Wälzkörperreihen stehen. Damit kann eine einzige Ventilklappe zur Schmierung mehrerer Wälzkörperreihen verwendet werden. Die Herstellung des Führungswagens, insbesondere des ersten Umlenkteils, vereinfacht sich dadurch erheblich. Darüber hinaus benötigt das Schmiermittelverteilsystem nur wenig Bauraum.

Der Bereich, an dem die Ventilklappe mit dem verbleibenden ersten Umlenkteil verbunden ist, kann absatzfrei ausgeführt sein. Durch diese Ausgestaltung sollen im Biegebereich der Ventilklappe Spannungsspitzen aufgrund des Kerbeffekts vermieden werden. Darüber hinaus wird erreicht, dass das Schmiermittel mit geringem Fließwiderstand durch das Ventil strömt.

Die Breite des U-förmigen Schlitzes kann zwischen 0,05 mm und 0,2 mm betragen. Mit einem derartigen Schlitz ist die Dichtheit des Ventils bei Verwendung von Schmieröl sicher gewährleistet. Gleichzeitig lässt sich der Schlitz im Kunststoffspritzgussverfahren prozesssicher herstellen.

An dem gesonderten weiteren Bauteil kann in geringem Abstand neben dem zweiten Schmierkanal wenigstens ein linienartig verlaufender Dichtfortsatz angeordnet sein.

Mit dem Dichtfortsatz wird der zweite Schmierkanal gegen Austritt von Schmiermittel abgedichtet.

Die Erfindung wird im Folgenden anhand der beigefügten Zeichnungen näher erläutert. Es stellt dar:
- Fig. 1: einen Querschnitt eines Linearwälzlagers mit einem erfindungsgemäßen Führungswagen;
- Fig. 2: eine Explosionsansicht des Führungswagens nach Fig. 1;
- Fig. 3: eine perspektivische Ansicht der dem Tragkörper zugewandten Seite des ersten Umlenkteils;
- Fig. 3a: einen Ausschnitt von Fig. 3 im Bereich der Ventilklappe, wobei die Blickrichtung die Längsrichtung ist;
- Fig. 4: eine perspektivische Ansicht der dem Tragkörper abgewandten Seite des ersten Umlenkteils;
- Fig. 4a: einen Ausschnitt von Fig. 4 im Bereich der Ventilklappe, wobei die Blickrichtung die Längsrichtung ist;
- Fig. 5: einen Querschnitt des ersten Umlenkteils im Bereich der Ventilklappe; und
- Fig. 6: eine perspektivische Ansicht der dem ersten Umlenkteil zugewandten Seite des zweiten Umlenkteils.

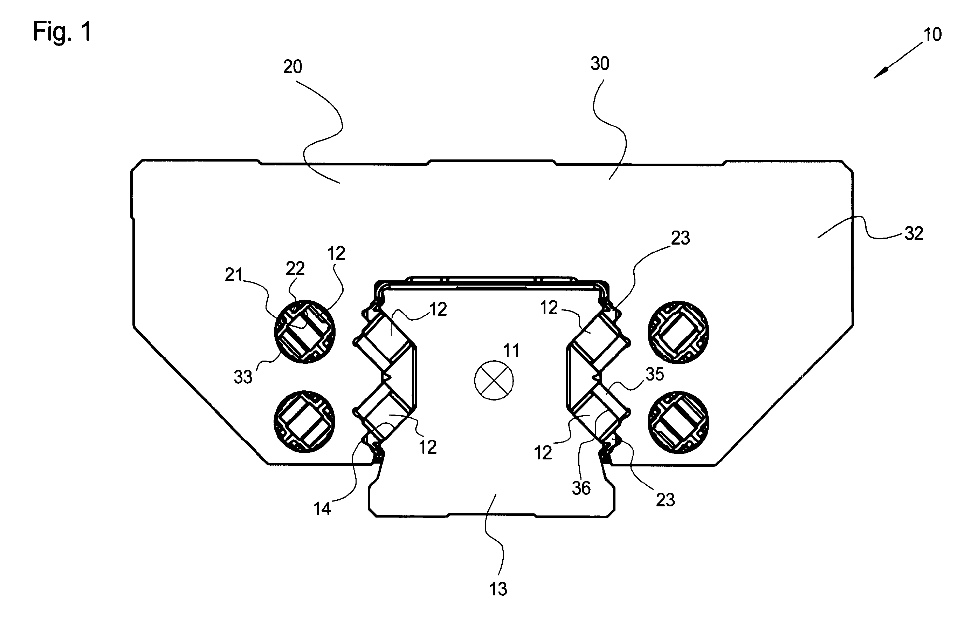

Fig. 1 zeigt einen Querschnitt eines Linearwälzlagers 10 mit einem erfindungsgemäßen Führungswagen 20. Der Führungswagen 20 ist auf einer Führungsschiene 13 in einer Längsrichtung 11 beweglich gerührt, wobei die Längsrichtung 11 senkrecht zur Zeichenebene von Fig. 1 ausgerichtet ist. Die Führungsschiene 13 besitzt über ihre gesamte Längserstreckung eine konstante Querschnittsform, wobei sie erheblich länger als der Führungswagen 20 ist. Die Führungsschiene 13 besteht aus Wälzlagerstahl und ist wenigstens im Bereich ihrer Laufbahnen 14 gehärtet. Insgesamt sind vier ebene Laufbahnen 14 vorgesehen, die jeweils unter 90° zueinander geneigt angeordnet sind.

Der Führungswagen 20 umfasst einen Tragkörper 30, der die Führungsschiene 13 U-förmig umgreift. Der Tragkörper 30 besteht aus einem einstückigen Grundkörper 32 aus ungehärtetem Stahl und vier gesonderten, plattenartigen Laufbahneinlagen 35 aus gehärtetem Wälzlagerstahl, die mit dem Grundkörper 32 verklebt sind. An den Laufbahneinlagen 35 sind Laufbahnen 36 für rollenförmige Wälzkörper 12 vorgesehen, die parallel zu den zugeordneten Laufbahnen 14 an der Führungsschiene 13 angeordnet sind, so dass die Wälzkörper 12 zwischen einander zugeordneten Laufbahnen 14; 36 abwälzen können. Selbstverständlich kann die vorliegende Erfindung auch bei einem bekannten einstückigen Tragkörper zum Einsatz kommen. Ebenso ist die Erfindung mit einer U-förmigen Führungsschiene und einem blockartigen Tragkörper verwendbar. Bei den Wälzkörpern kann es sich auch um Kugeln handeln.

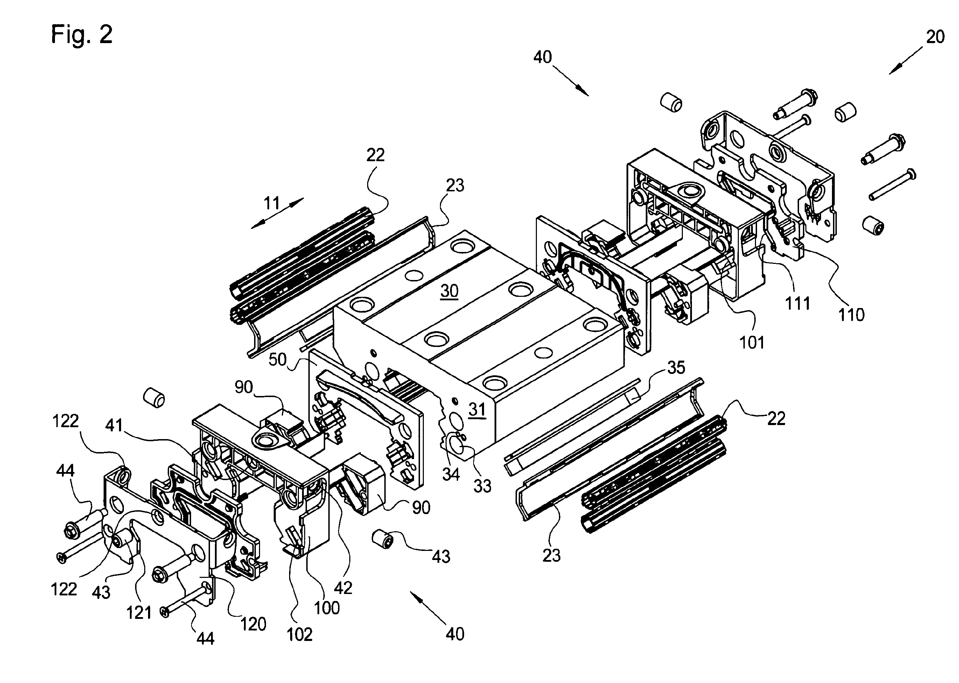

Jeder der vier tragenden Wälzkörperreihen ist ein Rücklaufkanal 21 zugeordnet, der in einem gesonderten Rücklaufrohr 22 aus Kunststoff ausgebildet ist, welches in eine kreisrunde, in Längsrichtung 11 verlaufende Rücklaufbohrung 33 im Grundkörper 32 eingebaut ist. Der Rücklaufkanal 21 ist über zwei gebogene Umlenkkanäle mit einer zugeordneten Laufbahn 36 am Tragkörper 30 verbunden, wobei die Umlenkkanäle in den mit Bezug auf Fig. 2 erläuterten Umlenkbaugruppen angeordnet sind.

Fig. 2 zeigt eine Explosionsansicht des erfindungsgemäßen Führungswagens 20. Der Tragkörper 30 besitzt zwei gegenüberliegende in Längsrichtung 11 weisende Stirnflächen 31. An diesen ist je eine Umlenkbaugruppe 40 angebracht, in der die gebogenen Umlenkkanäle für die Wälzkörper vorgesehen sind. Die beiden Umlenkbaugruppen 40 sind jeweils identisch ausgeführt, wobei die gebogenen Umlenkkanäle in einer Umlenkbaugruppe 40 jeweils von einem ersten, zwei zweiten und einem dritten Umlenkteil 50; 90; 100 begrenzt werden. Zur besseren Verständlichkeit wird das erste Umlenkteil im Folgenden als Umlenkplatte 50, die zweiten Umlenkteile als Umlenkeinsätze 90 und das dritte Umlenkteil als Umlenkkappe 100 angesprochen. Hierin ist jedoch keine Beschränkung des Schutzumfanges zu sehen.

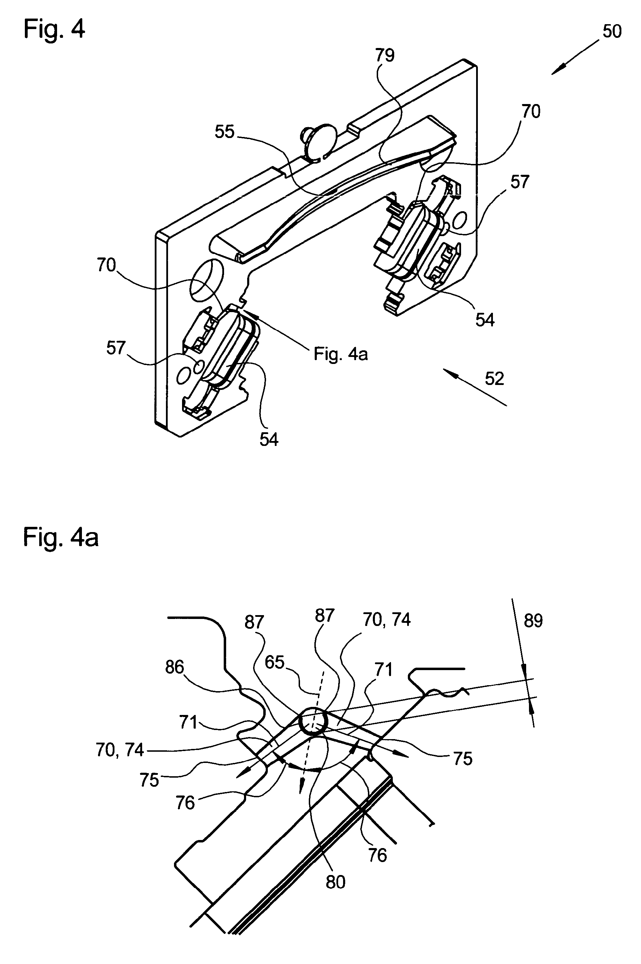

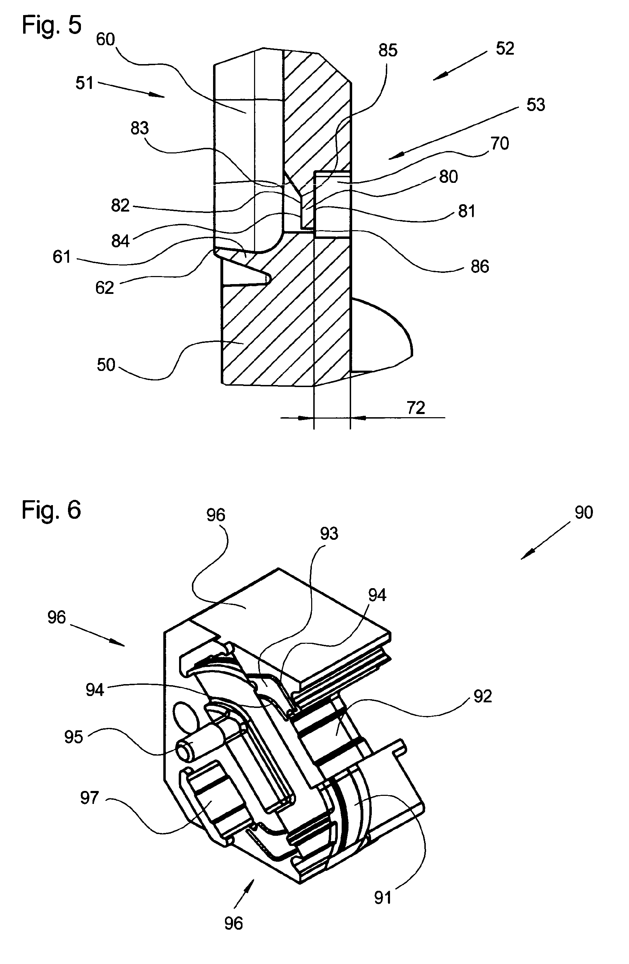

An der Umlenkplatte 50 sind zwei innere Begrenzungsflächen (Nr. 54; Fig. 4) für je einen inneren gebogenen Umlenkkanal vorgesehen. Am Umlenkeinsatz 90 ist die äußere Begrenzungsfläche (Nr. 91; Fig. 6) für den inneren Umlenkanal und die innere Begrenzungsfläche (Nr. 92; Fig. 6) des äußeren Umlenkkanals vorgesehen. Die äußere Begrenzungsfläche des äußeren Umlenkkanals ist größtenteils an der Umlenkkappe 100 vorgesehen, in der der Umlenkeinsatz 90 versenkt aufgenommen ist. Der Umlenkeinsatz 90 wird damit von der Umlenkkappe 100 und der Umlenkplatte 50 vollständig umschlossen.

Die Umlenkkappe 100 und der Umlenkeinsatz 90 sind aus Polyamid im Spritzgussverfahren hergestellt, während die Umlenkplatte 50 aus dem gummiartigen Werkstoff TEEE (Handelsname Hytrel) spritzgegossen ist. Die Umlenkplatte 50, die insgesamt plattenartig ausgeführt ist, besitzt die gleiche Außenkontur wie die wannenartige Umlenkkappe 100 und ist unter anderem als Dichtung gegen Schmiermittelaustritt zwischen der Umlenkkappe 100 und dem Tragkörper 30 vorgesehen.

Das Schmiermittel in Form von Schmierfett oder Schmieröl wird wahlweise über den vorderen oder einen der seitlichen Schmieranschlüsse 41; 42 an der Umlenkkappe zugeführt, wobei die nicht benötigten Schmieranschlüsse 41; 42 mit einem Gewindestift 43 verschlossen sind. Die Gewindestifte 43 werden in ein Gewinde 122 an einem Abstreifblech 120 eingeschraubt. Das Abstreifblech 120 aus nichtrostendem Stahl ist fest mit der Umlenkkappe 100 verbunden und besitzt eine Abstreifkontur 121, die mit geringem Abstand parallel zur Querschnittsform der Führungsschiene ausgebildet ist. Zwischen der Abstreifblech 120 und der Umlenkkappe 100 ist eine Enddichtung 110 aus TEEE vorgesehen, deren Dichtlippen 111 die Führungsschiene gleitend berühren.

Die zwei seitlichen Schmieranschlüsse 42 einer Umlenkbaugruppe sind über dritte Schmierkanäle (Nr. 79; Fig. 4), die von der Umlenkkappe 100 und der Umlenkplatte 50 begrenzt werden, mit einer einzigen Übergabebohrung (Nr. 55; Fig. 4) in der Umlenkkappe verbunden, durch die das gesamte Schmiermittel fließen muss, um zu den Wälzkörpern zu gelangen. Der vordere Schmieranschluss 41 steht der Übergabebohrung unmittelbar gegenüber.

Jede Umlenkbaugruppe 40 ist über insgesamt vier Schraubbolzen 44 mit dem Tragkörper 30 verschraubt. Auf beiden Seiten der Führungsschiene ist je ein gesonderter Dichtrahmen 23 zwischen den Umlenkkappen 100 befestigt. An dem Dichtrahmen 23 ist eine Längsdichtung vorgesehen, welche die Führungsschiene gleitend berührt. Gleichzeitig werden die Wälzkörper durch den Dichtrahmen 23 gegen Herausfallen aus dem Führungswagen 20 gesichert, wenn sich letztgenannter nicht auf der Führungsschiene befindet.

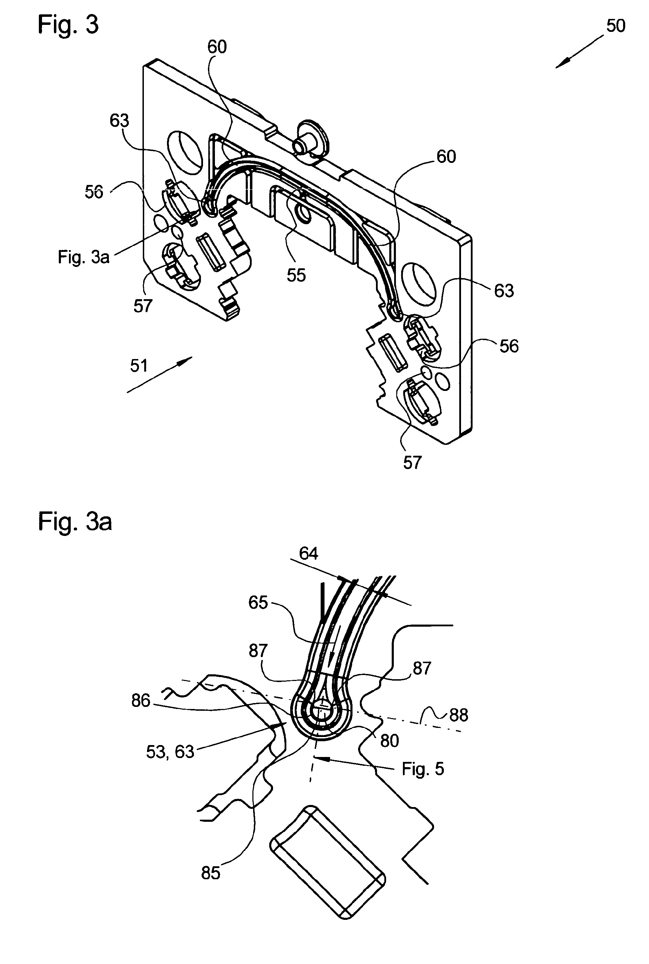

Fig. 3 zeigt das erste Umlenkteil bzw. die Umlenkplatte 50 von der Rückseite 51, welche dem Tragkörper zugewandt ist. Die Umlenkplatte 50 ist im Wesentlichen plattenartig mit einer U-förmigen Außenkontur ausgeführt. Die vorliegende Erfindung kann jedoch auch bei einem nicht plattenartigen ersten Umlenkteil zur Anwendung kommen, wie es beispielsweise aus der DE 43 30 772 A1 bekannt ist.

An den beiden U-Schenkeln sind je zwei Zentrierausnehmungen 56 vorgesehen, in welche die Rücklaufrohre (Nr. 22; Fig. 2) formschlüssig eingreifen, damit diese im Wesentlichen absatzfrei gegenüber dem zugeordneten gebogenen Umlenkkanal ausgerichtet sind. Gleichzeitig wird hierdurch die gesamte Umlenkbaugruppe gegenüber dem Tragkörper ausgerichtet, da das Rücklaufrohr sowohl in der Rücklaufbohrung (Nr. 33; Fig. 1) als auch in der Zentrierausnehmung 56 im Wesentlichen spielfrei aufgenommen ist.

Weiter ist an der Umlenkplatte der erste Schmierkanal 60 vorgesehen, der von der bereits angesprochenen Übergabebohrung 55 zu zwei erfindungsgemäßen Ventilklappen führt, die jeweils im Bereich eines U-Schenkels der Umlenkplatte angeordnet sind. Die Gestaltung der Querschnittsform des ersten Schmierkanals ist Gegenstand der DE 10 2007 056 877 A1. Der erste Schmierkanal 60 besitzt eine im Wesentlichen U-förmige Querschnittsform, die von der Stirnfläche (Nr. 31; Fig. 2) des Tragkörpers abgedeckt wird. Die Seitenwände des Schmierkanals sind in der Art einer Dichtlippe ausgeführt, so dass zwischen der Umlenkplatte und dem Tragkörper kein Schmiermittel austreten kann.

Fig. 3a zeigt eine Teilansicht der Rückseite des ersten Umlenkteils bzw. der Umlenkplatte im Bereich der Ventilklappe 80 an einem Ende 63 des ersten Schmierkanals 60, wobei der Ansichtsbereich in Fig. 3 entsprechend gekennzeichnet ist.

Der U-förmige Schlitz 86, der die Ventilklappe 80 definiert, ist in Form eines Kreissegments ausgebildet, das sich über einen Winkel von etwa 220° erstreckt. Die Breite des Schlitzes 86 beträgt 0,08 mm, wobei die Tiefenrichtung des Schlitzes 86 genau in Längsrichtung verläuft. Die beiden Endpunkte 87 des U-förmigen Schlitzes definieren eine Biegeachse 88 der Ventilklappe 80. Die Ventilklappe 80 ist bezüglich der Fließrichtung 65 des Schmiermittels im ersten Schmierkanal 60 hinter der Biegeachse 88 angeordnet.

Der Bereich vor der Biegeachse ist rampenartig ausgeführt, damit im Biegebereich der Ventilklappe 80 keine Sprünge bezüglich der Materialdicke vorhanden sind, die zu Spannungsspitzen aufgrund des Kerbeffekts führen könnten. Hierzu wird auf die Schnittansicht gemäß Fig. 5 verwiesen, deren Schnittlage in Fig. 3a angegeben ist. Hinzuweisen ist in beiden Figuren auf die Übergangskante 85, an der die Ventilklappe 80 von einem dünnen, ebenen, plattenartigen Bereich in einen Bereich mit rampenartig ansteigender Materialdicke übergeht. Die genannte Übergangskante 85 ist bezüglich der Fließrichtung 65 des Schmiermittels kurz hinter der Biegeachse 88 angeordnet, so dass die Verbiegung der Ventilklappe im Wesentlichen in einem Bereich geringer Materialdicke stattfindet. Die Dicke der Ventilklappe 80 und die Lage der Übergangskante 85 sind so gewählt, dass bei maximal geöffneter Ventilklappe 80 diejenigen Spannungen nicht überschritten werden, die der Werkstoff der Umlenkplatte 50 ertragen kann, ohne sich plastisch zu verformen.

Der Endbereich 63 des ersten Schmierkanals 60 ist konzentrisch bezüglich des U-förmigen Schlitzes 86 ausgebildet. Insbesondere verläuft die Dichtkante (Nr. 62; Fig. 5) an der Seitenwand des ersten Schlitzes auf einem Kreisbogen, der konzentrisch zum U-förmigen Schlitz 86 ist. Der Durchmesser des genannten Kreisbogens ist etwas größer als die Breite 64 des ersten Schmierkanals 60, um Raum für die Ventilklappe 80 zu schaffen.

Fig. 4 zeigt das erste Umlenkteil bzw. die Umlenkplatte 50 von der Vorderseite 52, welche vom Tragkörper abgewandt ist. Im Bereich der U-Schenkel ist je eine innere Begrenzungsfläche 54 für einen inneren gebogenen Umlenkkanal angeordnet. Etwas oberhalb sind die beiden zweiten Schmierkanäle 70 vorgesehen, die von der Ventilklappe zu zwei Reihen endlos umlaufenden Wälzkörpern führen.

Weiter ist der dritte Schmierkanal 79 zu erkennen, der von den seitlichen Schmieranschlüssen (Nr. 42; Fig. 2) zu der zentralen Übergabebohrung 55 führt, welche die Umlenkplatte 50 durchsetzt. Der dritte Schmierkanal 79 ist an der Umlenkplatte 50 im Querschnitt U-förmig ausgebildet, wobei er von der Umlenkkappe (Nr. 100; Fig. 2) abgedeckt wird.

Fig. 4a zeigt eine Teilansicht von Fig. 4 im Bereich der Ventilklappe 80, wobei der Ansichtsbereich in Fig. 4 entsprechend gekennzeichnet ist. Von der Ventilklappe 80 führen zwei zweite Schmierkanäle 70 zu je einer Reihe von endlos umlaufenden Wälzkörpern. Die zweiten Schmierkanäle 70 sind im Querschnitt betrachtet U-förmig, insbesondere rechteckig ausgeführt, wobei sie von einem weiteren Umlenkteil, nämlich dem zweiten Umlenkteil bzw. dem Umlenkeinsatz (Nr. 90, Fig. 2) abgedeckt werden. Der Umlenkeinsatz ist im Bereich der zweiten Schmierkanäle eben ausgeführt, obgleich andere Oberflächenformen ebenfalls denkbar sind.

Die zweiten Schmierkanäle 70 sind auf ein kleinst mögliches Volumen hin optimiert. Die Bodenfläche 74 der zweiten Schmierkanäle ist eben ausgeführt und liegt in einer Flucht mit der vorderen Oberfläche der Ventilklappe 80, welche ebenfalls eben ausgeführt ist. Die Breite der zweiten Schmierkanäle 70 nimmt von der Ventilklappe 80 zu den Austrittsöffnungen 75 hin keilförmig ab. Die konstante Tiefe (Nr. 72; Fig. 5) der zweiten Schmierkanäle 70 ist etwas größer als die Länge 89 der Ventilklappe 80, die ausgehend von der Biegeachse (Nr. 88; Fig. 3a) gemessen wird. Anzumerken ist, dass die Endpunkte 87 des U-förmigen Schlitzes 86 in der Nähe der Wand der zweiten Schmierkanäle 70 angeordnet sind. Die Ventilklappe 80 biegt sich also beim Öffnen zur genannten Wand hin. Die Winkel 76 zwischen der Fließrichtung 65 des ersten Schmierkanals und der beiden zweiten Schmierkanäle 76 beträgt 90° bzw. 60°, so dass das Schmiermittel in Fig. 4a unten an der geöffneten Ventilklappe 80 widerstandsarm vorbeifließen kann.

Fig. 5 zeigt einen Querschnitt des ersten Umlenkteils bzw. der Umlenkplatte 50 im Bereich der Ventilklappe 80, wobei die Schnittlage in Fig. 3a angegeben ist. Hinzuweisen ist auf die Seitenwand 61 des ersten Schmierkanals 60, die keilartig als flexible Dichtlippe ausgeführt ist. Die Querschnittsform der genannten Dichtlippe ist entlang des gesamten Randes des ersten Schmierkanals 60 konstant. Die Dichtkante 62 der Seitenwand 61 steht im dargestellten nicht eingebauten Zustand gegenüber der im Wesentlichen ebenen rückseitigen Oberfläche der Umlenkplatte 50 etwas über, so dass die Dichtkante 62 im eingebauten Zustand mit Vorspannung an der Stirnfläche (Nr. 31; Fig. 2) des Tragkörpers anliegt.

In Fig. 5 ist weiter zu erkennen, dass der erste Schmierkanal 60 im Bereich der Ventilklappe 80 bzw. dem Kreuzungsbereich 53 mit geringem Abstand zu den zweiten Schmierkanälen 70 verläuft. Die Dicke der Ventilklappe kann dabei unmittelbar durch den Abstand der beiden Schmierkanäle definiert werden, wobei die Ventilklappe sowohl an der Vorder- als auch an der Rückseite 81; 82 eben ausgeführt sein kann. Im vorliegenden Ausführungsbeispiel hat man sich jedoch dafür entschieden, nur die Vorderseite 81 der Ventilklappe 80 eben auszuführen, wobei an der Rückseite 82 der Ventilklappe 80 ein rampenartiger Bereich 83 vorgesehen ist, der an der Übergangskante 85 in einen plattenartigen Bereich 84 mit konstanter Materialdicke übergeht. Aufgrund der vielfältigen Funktionen der Umlenkplatte 50 kann deren Dicke und damit der Abstand des ersten und des zweiten Schmierkanals 60; 70 nicht vollständig frei gewählt werden. Durch die vorliegende Gestaltung der Rückseite 82 der Ventilklappe 80 können deren Elastizitätseigenschaften dennoch frei gewählt werden, wie mit Bezug auf Fig. 3a bereits erläutert wurde.

Hinzuweisen ist weiter darauf, dass der rampenartige Bereich 83 auf Höhe der Seitenwand des zweiten Schmierkanals 70 endet, da ein längerer rampenartiger Bereich 83 im Wesentlichen keine Vorteile bezüglich der angestrebten Minimierung des Kerbeffekts bringt.

Fig. 6 zeigt das zweite Umlenkteil bzw. den Umlenkeinsatz 90. Der Umlenkeinsatz 90 besitzt mehrere ebene Außenoberflächen 96, mit denen er an der Umlenkkappe 100 spielfrei anliegt, so dass er gegenüber dieser ausgerichtet ist. Der zapfenartige Ausrichtfortsatz 95 des Umlenkeinsatzes 90 greift in Ausrichtbohrungen (Nr. 57; Fig. 3 bzw. Nr. 34; Fig. 2) in der Umlenkplatte und im Tragkörper ein, so dass auch diese Teile zueinander ausgerichtet sind.

In dem Umlenkeinsatz 90 ist die äußere Begrenzungsfläche 91 des inneren Umlenkkanals vorgesehen, welche diesen zusammen mit der inneren Begrenzungsfläche (Nr. 54; Fig. 4) an der Umlenkplatte vollständig begrenzt. Weiter ist an dem Umlenkeinsatz die innere Begrenzungsfläche 92 und teilweise die äußere Begrenzungsfläche 97 des äußeren Umlenkkanals vorgesehen. Der äußere Umlenkkanal wird außerdem durch die Umlenkkappe und im Bereich einer Wälzkörpereinfüllöffnung (Nr. 102; Fig. 2) durch die Enddichtung (Nr. 80; Fig. 2) begrenzt. Der innere und der äußere Umlenkkanal kreuzen sich im Winkel von 90°, wobei der innere Umlenkkanal im Bereich des Krümmungsmittelpunktes des äußeren Umlenkkanals verläuft.

Der Bereich 93 des Umlenkeinsatzes 90, der die zweiten Schmierkanäle abdeckt, ist eben ausgeführt. Parallel benachbart zum Rand des zweiten Schmierkanals sind zwei schmale Dichtfortsätze 94 vorgesehen, die sich in das gummiartige Material der Umlenkplatte eindrücken, um die zweiten Schmiermittelkanäle gegen Schmiermittelaustritt abzudichten.

### Bezugszeichenliste

- 10: Linearwälzlager
- 11: Längsrichtung
- 12: Wälzkörper
- 13: Führungsschiene
- 14: Laufbahn der Führungsschiene

- 20: Führungswagen
- 21: Rücklaufkanal
- 22: Rücklaufrohr
- 23: Dichtrahmen

- 30: Tragkörper
- 31: Stirnfläche
- 32: Grundkörper
- 33: Rücklaufbohrung
- 34: Ausrichtbohrung des Grundkörpers
- 35: Laufbahneinlage
- 36: Laufbahn des Führungswagens

- 40: Umlenkbaugruppe
- 41: vorderer Schmieranschluss
- 42: seitlicher Schmieranschluss
- 43: Gewindestift
- 44: Befestigungsschraube

- 50: erstes Umlenkteil bzw. Umlenkplatte
- 51: Rückseite
- 52: Vorderseite
- 53: Kreuzungsbereich
- 54: innere Begrenzungsfläche des inneren Umlenkkanals
- 55: Übergabebohrung
- 56: Zentrierausnehmung für das Rückführrohr
- 57: Ausrichtbohrung der Umlenkplatte

- 60: erster Schmierkanal
- 61: Seitenwand des ersten Schmierkanals
- 62: Dichtkante
- 63: Ende des ersten Schmierkanals
- 64: Breite des ersten Schmierkanals
- 65: Fließrichtung des ersten Schmierkanals

- 70: zweiter Schmierkanal
- 71: Fließrichtung des zweiten Schmierkanals
- 72: Tiefe des zweiten Schmierkanals
- 73: Breite des zweiten Schmierkanals
- 74: Bodenfläche des zweiten Schmierkanals
- 75: Austrittsöffnung
- 76: Winkel zwischen den Fließrichtungen 65; 71

- 79: dritter Schmierkanal

- 80: Ventilklappe
- 81: vordere Oberfläche
- 82: rückseitige Oberfläche
- 83: rampenartiger Bereich
- 84: plattenartiger Bereich
- 85: Übergangskante
- 86: U-förmiger Schlitz
- 87: Endpunkt des U-förmigen Schlitzes
- 88: Biegeachse
- 89: Länge der Ventilklappe
- 90: zweites Umlenkteil bzw. Umlenkeinsatz
- 91: äußere Begrenzungsfläche des inneren Umlenkkanals
- 92: innere Begrenzungsfläche des äußeren Umlenkkanals
- 93: Bereich, der die zweiten Schmierkanäle abdeckt
- 94: Dichtfortsatz
- 95: Ausrichtfortsatz
- 96: ebene Außenoberfläche
- 97: äußere Begrenzungsfläche des äußeren Umlenkkanals

- 100: drittes Umlenkteil bzw. Umlenkkappe
- 101: äußere Begrenzungsfläche des äußeren Umlenkkanals
- 102: Wälzkörpereinfüllöffnung

- 110: Enddichtung
- 111: Dichtlippe

- 120: Abstreifblech
- 121: Abstreifkontur
- 122: Gewinde

## Patentansprüche

1. Führungswagen (20) zur Verwendung mit einer sich in einer Längsrichtung (11) erstreckenden Führungsschiene (13), wobei der Führungswagen (20) einen Tragkörper (30) umfasst, an dem wenigstens eine sich in Längsrichtung (11) erstreckende Laufbahn (36) vorgesehen ist, wobei der Laufbahn (36) eine Reihe von Wälzkörpern (12) zugeordnet ist, die zwischen der Führungsschiene (13) und der Laufbahn (36) abwälzen können, wobei der Tragkörper (30) zwei gegenüberliegende, in Längsrichtung (11) weisende Stirnflächen (31) aufweist, an denen je eine Umlenkbaugruppe (40) angeordnet ist, wobei der Laufbahn (36) je ein gebogener Umlenkkanal (54; 91; 92; 97) in den beiden Umlenkbaugruppen (40) zugeordnet ist, die über einen Rücklaufkanal (21) so verbunden sind, dass die Wälzkörper (12) endlos umlaufen können,
wobei wenigstens ein gebogener Umlenkanal (54; 91; 92; 97) abschnittsweise durch eine Vorderseite (52) eines ersten Umlenkteils (50) begrenzt wird, wobei die gegenüberliegende Rückseite (51) des ersten Umlenkteils (50) an der Stirnfläche (31) des Tragkörpers (30) anliegt,
wobei an der Rückseite (51) des ersten Umlenkteils (50) ein erster im Querschnitt U-förmiger Schmierkanal (60) angeordnet ist, der quer zur Längsrichtung (11) verläuft, wobei er von dem Tragkörper (30) abgedeckt wird,
wobei wenigstens eine elastisch umbiegbare Ventilklappe (80) vorgesehen ist, die einstückig mit dem ersten Umlenkteil (50) ausgebildet ist,
wobei an der Vorderseite (52) des ersten Umlenkteils (50) wenigstens ein zweiter im Querschnitt U-förmiger Schmierkanal (70) angeordnet ist, der quer zur Längsrichtung (11) verläuft, wobei der zweite Schmierkanal (70) durch wenigstens ein weiteres gesondertes Bauteil (90) abgedeckt ist,
wobei der erste und der zweite Schmierkanal (60; 70) in einem Kreuzungsbereich (53) mit geringem Abstand zueinander verlaufen,
**dadurch gekennzeichnet, dass** die Ventilklappe (80) einen Ventilspalt (86) definiert, der ausschließlich durch das erste Umlenkteil (50) begrenzt wird, wobei die Ventilklappe (80) in Ruhestellung im Wesentlichen senkrecht zur Längsrichtung (11) ausgerichtet ist, wobei die Ventilklappe (80) durch einen U-förmigen Schlitz (86) definiert wird, der den ersten und den zweiten Schmierkanal (60; 70) im Kreuzungsbereich (53) miteinander verbindet.

2. Führungswagen nach Anspruch 1,
wobei der U-förmige Schlitz (86) in Form eines Kreissegments ausgebildet ist.

3. Führungswagen nach einem der vorstehenden Ansprüche,
wobei die Biegeachse (88) der Ventilklappe (80), welche durch die beiden Endpunkte (87) des U-förmigen Schlitzes (86) definiert wird, im Wesentlichen senkrecht zur Fließrichtung (65) des ersten Schmierkanals (60) angeordnet ist, wobei die Ventilklappe (80) bezüglich der Fließrichtung (65) des ersten Schmierkanals (60) hinter der Biegeachse (88) angeordnet ist.

4. Führungswagen nach einem der vorstehenden Ansprüche,
wobei das Ende des ersten Schmierkanals (63) im Wesentlichen konzentrisch bezüglich des U-förmigen Schlitzes (86) ausgeführt ist.

5. Führungswagen nach einem der vorstehenden Ansprüche,
wobei die Bodenflächen (74) des zweiten Schmierkanals (70) eben ausgeführt ist, wobei die zugeordnete Oberfläche (81) der Ventilklappe (80) in einer Ebene mit der genannten Bodenfläche (74) angeordnet ist.

6. Führungswagen nach einem der vorstehenden Ansprüche,
wobei die Tiefe (72) des zweiten Schmierkanals (70) größer oder gleich der Länge (89) der Ventilklappe (80) ist.

7. Führungswagen nach einem der vorstehenden Ansprüche,
wobei die Fließrichtungen (65; 71) des ersten und des zweiten Schmierkanals in einem Winkel (76) kleiner als 100° zueinander ausgerichtet sind.

8. Führungswagen nach einem der vorstehenden Ansprüche,
wobei das erste Umlenkteil (50) eine Austrittsöffnung (75) des zweiten Schmierkanals (70) zu der Reihe von Wälzkörpern (12) definiert, wobei sich die Breite des zweiten Schmierkanals (70) von der Ventilklappe (80) zur Austrittsöffnung (75) keilförmig verringert.

9. Führungswagen nach einem der vorstehenden Ansprüche,
wobei wenigstens zwei gesonderte Reihen von endlos umlaufenden Wälzkörpern (12) vorgesehen sind, wobei mehrere zweite Schmierkanäle (70) vorgesehen sind, die in Schmiermittelerübertragungsverbindung mit je einer der Wälzkörperreihen (12) stehen.

10. Führungswagen nach einem der vorstehenden Ansprüche,
wobei der Bereich (83), an dem die Ventilklappe (80) mit dem verbleibenden ersten Umlenkteil (50) verbunden ist, absatzfrei ausgeführt ist.

11. Führungswagen nach einem der vorstehenden Ansprüche,
wobei die Breite des U-förmigen Schlitzes (86) zwischen 0,05 mm und 0,2 mm beträgt.

12. Führungswagen nach einem der vorstehenden Ansprüche,
wobei an dem gesonderten weiteren Bauteil (90) in geringem Abstand neben dem zweiten Schmierkanal (70) wenigstens ein linienartig verlaufender Dichtfortsatz (94) angeordnet ist.

## Claims

1. Guide carriage (20) for use with a guide rail (13) which extends in a longitudinal direction (11), the guide carriage (20) comprising a supporting body (30), on which at least one raceway (36) which extends in the longitudinal direction (11) is provided, the raceway (36) being assigned a row of rolling bodies (12) which can roll between the guide rail (13) and the raceway (36), the supporting body (30) having two end faces (31) which lie opposite one another, point in the longitudinal direction (11), and on which in each case one deflection module (40) is arranged, the raceway (36) being assigned in each case one curved deflection channel (54; 91; 92; 97) in the two deflection modules (40), which deflection channels (54; 91; 92; 97) are connected via a return channel (21) in such a way that the rolling bodies (12) can circulate endlessly, at least one curved deflection channel (54; 91; 92; 97) being delimited in sections by a front side (52) of a first deflection part (50), that rear side (51) of the first deflection part (50) which lies opposite bearing against the end face (31) of the supporting body (30), a first lubricating channel (60) which is of U-shaped cross section and runs transversely with respect to the longitudinal direction (11) being arranged on the rear side (51) of the first deflection part (50), the said lubricating channel (60) being covered by the supporting body (30), at least one valve flap (80) being provided which can be bent over elastically and is configured in one piece with the first deflection part (50), at least one second lubricating channel (70) which is of U-shaped cross section and runs transversely with respect to the longitudinal direction (11) being arranged on the front side (52) of the first deflection part (50), the second lubricating channel (70) being covered by at least one further separate component (90), the first and the second lubricating channel (60; 70) running at a small spacing from one another in an intersecting region (53), **characterized in that** the valve flap (80) defines a valve gap (86) which is delimited exclusively by the first deflection part (50), the valve flap (80) being oriented substantially perpendicularly with respect to the longitudinal direction (11) in the rest position, the valve flap (80) being defined by a U-shaped slot (86) which connects the first and the second lubricating channel (60; 70) to one another in the intersecting region (53).

2. Guide carriage according to Claim 1, the U-shaped slot (86) being configured in the form of a circular segment.

3. Guide carriage according to either of the preceding claims, the bending axis (88) of the valve flap (80) which is defined by the two end points (87) of the U-shaped slot (86) being arranged substantially perpendicularly with respect to the flow direction (65) of the first lubricating channel (60), the valve flap (80) being arranged behind the bending axis (88) with regard to the flow direction (65) of the first lubricating channel (60).

4. Guide carriage according to one of the preceding claims, the end of the first lubricating channel (63) being configured substantially concentrically with regard to the U-shaped slot (86).

5. Guide carriage according to one of the preceding claims, the bottom faces (74) of the second lubricating channel (70) being of planar configuration, the associated surface (81) of the valve flap (80) being arranged in one plane with the said bottom face (74).

6. Guide carriage according to one of the preceding claims, the depth (72) of the second lubricating channel (70) being greater than or equal to the length (89) of the valve flap (80).

7. Guide carriage according to one of the preceding claims, the flow directions (65; 71) of the first and the second lubricating channel being oriented at an angle (76) of less than 100° with respect to one another.

8. Guide carriage according to one of the preceding claims, the first deflection part (50) defining an outlet opening (75) of the second lubricating channel (70) to the row of rolling bodies (12), the width of the second lubricating channel (70) decreasing in a wedge-like manner from the valve flap (80) to the outlet opening (75).

9. Guide carriage according to one of the preceding claims, at least two separate rows of endlessly circulating rolling bodies (12) being provided, a plurality of second lubricating channels (70) being provided which are in a lubricating-transferring connection with in each case one of the rolling body rows (12).

10. Guide carriage according to one of the preceding claims, the region (83), in which the valve flap (80) is connected to the remaining first deflection part (50), being of step-free configuration.

11. Guide carriage according to one of the preceding claims, the width of the U-shaped slot (86) being between 0.05 mm and 0.2 mm.

12. Guide carriage according to one of the preceding claims, at least one linearly running sealing projection (94) being arranged on the separate further component (90) at a small spacing next to the second lubricating channel (70).

## Revendications

1. Chariot de guidage (20) destiné à être utilisé avec un rail de guidage (13) s'étendant dans une direction longitudinale (11), le chariot de guidage (20) comportant un corps de support (30) sur lequel est prévu au moins un chemin de roulement (36) s'étendant dans la direction longitudinale (11), une rangée de corps de roulement (12) étant associée au chemin de roulement (36), lesquels corps de roulement peuvent rouler entre le rail de guidage (13) et le chemin de roulement (36), le corps de support (30) comprenant deux surfaces frontales (31) opposées orientées dans la direction longitudinale (11), sur lesquelles est disposé un module de déviation (40) respectif, un canal de déviation courbé (54 ; 91 ; 92 ; 97) respectif dans les deux modules de déviation (40) étant associé au chemin de roulement (36), lesquels canaux de déviation sont reliés par le biais d'un canal de retour (21), de telle sorte que les corps de roulement (12) puissent circuler sans fin, au moins un canal de déviation courbé (54 ; 91 ; 92 ; 97) étant limité par sections par un côté avant (52) d'une première partie de déviation (50), le côté arrière opposé (51) de la première partie de déviation (50) s'appliquant contre la surface frontale (31) du corps de support (30), un premier canal de lubrification (60) en forme de U en section transversale étant disposé sur le côté arrière (51) de la première partie de déviation (50), lequel premier canal de lubrification s'étend transversalement à la direction longitudinale (11), le premier canal de lubrification étant recouvert par le corps de support (30),
au moins un clapet de soupape (80) pliable élastiquement étant prévu, lequel est réalisé d'une seule pièce avec la première partie de déviation (50),
au moins un deuxième canal de lubrification (70) en forme de U en section transversale étant disposé sur le côté avant (52) de la première partie de déviation (50), lequel deuxième canal de lubrification s'étend transversalement à la direction longitudinale (11), le deuxième canal de lubrification (70) étant recouvert par au moins un composant séparé supplémentaire (90),
le premier et le deuxième canal de lubrification (60 ; 70) s'étendant à une faible distance l'un de l'autre dans une région de croisement (53), **caractérisé en ce que** le clapet de soupape (80) définit un interstice de soupape (86) qui est limité exclusivement par la première partie de déviation (50), le clapet de soupape (80) étant orienté essentiellement perpendiculairement à la direction longitudinale (11) dans la position de repos, le clapet de soupape (80) étant défini par une fente (86) en forme de U qui relie l'un à l'autre le premier et le deuxième canal de lubrification (60 ; 70) dans la région de croisement (53).

2. Chariot de guidage selon la revendication 1, dans lequel la fente (86) en forme de U est réalisée sous la forme d'un segment de cercle.

3. Chariot de guidage selon l'une quelconque des revendications précédentes,
dans lequel l'axe de flexion (88) du clapet de soupape (80), lequel est défini par les deux points d'extrémité (87) de la fente (86) en forme de U, est disposé essentiellement perpendiculairement au sens d'écoulement (65) du premier canal de lubrification (60), et dans lequel le clapet de soupape (80) est disposé derrière l'axe de flexion (88) par rapport au sens d'écoulement (65) du premier canal de lubrification (60).

4. Chariot de guidage selon l'une quelconque des revendications précédentes,
dans lequel l'extrémité du premier canal de lubrification (63) est réalisée essentiellement concentriquement par rapport à la fente (86) en forme de U.

5. Chariot de guidage selon l'une quelconque des revendications précédentes,
dans lequel les surfaces de base (74) du deuxième canal de lubrification (70) sont réalisées de manière plane, la surface associée (81) du clapet de soupape (80) étant disposée dans un plan avec ladite surface de base (74).

6. Chariot de guidage selon l'une quelconque des revendications précédentes,
dans lequel la profondeur (72) du deuxième canal de lubrification (70) est supérieure ou égale à la longueur (89) du clapet de soupape (80).

7. Chariot de guidage selon l'une quelconque des revendications précédentes,
dans lequel les sens d'écoulement (65 ; 71) du premier et du deuxième canal d'écoulement sont orientés l'un par rapport à l'autre suivant un angle (76) inférieur à 100°.

8. Chariot de guidage selon l'une quelconque des revendications précédentes,
dans lequel la première partie de déviation (50) définit une ouverture de sortie (75) du deuxième canal de lubrification (70) par rapport à la rangée de corps de roulement (12), et dans lequel la largeur du deuxième canal de lubrification (70) se rétrécit de manière cunéiforme à partir du clapet de soupape (80) jusqu'à l'ouverture de sortie (75).

9. Chariot de guidage selon l'une quelconque des revendications précédentes,
dans lequel au moins deux rangées séparées de corps de roulement (12) circulant sans fin sont prévues, et dans lequel plusieurs deuxièmes canaux de lubrification (70) sont prévus, lesquels sont en liaison de transfert de lubrifiant avec l'une des rangées de corps de roulement (12) respective.

10. Chariot de guidage selon l'une quelconque des revendications précédentes,
dans lequel la région (83) au niveau de laquelle le clapet de soupape (80) est relié à la première partie de déviation (50) restante est réalisée sans épaulement.

11. Chariot de guidage selon l'une quelconque des revendications précédentes,
dans lequel la largeur de la fente (86) en forme de U vaut entre 0,05 mm et 0,2 mm.

12. Chariot de guidage selon l'une quelconque des revendications précédentes,
dans lequel au moins une saillie d'étanchéité (94) s'étendant de manière linéaire est disposée sur le composant supplémentaire séparé (90) à une faible distance près du deuxième canal de lubrification (70).
